# EUROPÄISCHE PATENTSCHRIFT

(11) **EP 2 630 722 B1**
(45) Veröffentlichungstag und Bekanntmachung des Hinweises auf die Patenterteilung: **20.08.2014**
(21) Anmeldenummer: 11754336.3
(22) Anmeldetag: 26.08.2011
(51) Int. Cl.: H02K 11/00

(54) **STATOR EINER ELEKTRISCHEN MASCHINE**
STATOR OF AN ELECTRICAL MACHINE
STATOR D'UNE MACHINE ÉLECTRIQUE

(30) Priorität: 20.12.2010 DE 102010063581; 21.10.2010 DE 102010042751
(43) Veröffentlichungstag der Anmeldung: 28.08.2013
(73) Patentinhaber: Robert Bosch GmbH, 70442 Stuttgart (DE)
(72) Erfinder: MARSCHALL, Peter, H-3711 Szirmabesenyö (HU); LINDNER, Klaus, 74382 Neckarwestheim (DE)
(86) Internationale Anmeldenummer: PCT/EP2011/064712
(87) Internationale Veröffentlichungsnummer: WO 2012/052208

(56) Entgegenhaltungen:
- EP-A1- 1 322 026
- EP-A1- 2 066 008
- EP-A2- 1 278 291
- EP-A2- 1 294 079
- DE-A1- 3 929 718
- DE-A1- 19 606 141
- DE-A1- 19 706 424
- JP-A- 63 249 445
- JP-A- 2003 092 858
- US-A- 4 313 069
- US-A- 4 328 438
- US-A1- 2008 297 011

## Beschreibung

### Stand der Technik

Die Erfindung geht aus von einem Stator einer elektrischen Maschine nach der Gattung des Hauptanspruchs.
Es ist schon ein Stator einer elektrischen Maschine aus der EP 2 066 008 A1 bekannt, mit elektrischen Spulen und mit einem Temperatursensor zur Erfassung der Temperatur an einer der elektrischen Spulen, wobei der Temperatursensor im Bereich zwischen zwei Spulen an einem Sensorträger vorgesehen ist und ein Sensorelement und zumindest ein mit dem Sensorelement verbundenes Sensorkabel umfasst. Nachteilig ist, dass das Sensorelement des Temperatursensors nicht sicher mit den Spulen kontaktiert. Damit wird nicht sicher die höchste Temperatur an der Spule gemessen, so dass das Herabregeln der elektrischen Maschine infolge einer Überhitzung zu spät erfolgen könnte. Die Temperaturmessung ist daher nicht zuverlässig.
Aus der JP 2003092858 A und der JP 63249445 A ist ein Sensorträger mit einem Sensorelement bekannt, wobei der Sensorträger ein Federelement aufweist, das das Sensorelement gegen eine der Spulen des Stators drückt.

### Vorteile der Erfindung

Der erfindungsgemäße Stator einer elektrischen Maschine mit den kennzeichnenden Merkmalen des Hauptanspruchs hat demgegenüber den Vorteil, dass das Sensorelement sicher mit einer der Spulen kontaktiert wird, indem der Sensorträger ein Federelement aufweist, das das Sensorelement gegen eine der Spulen drückt. Der Wärmeübergang von der Spule auf das Sensorelement ist dadurch verbessert, so dass die Messung der Temperatur der elektrischen Spule verbessert ist.

Durch die in den Unteransprüchen aufgeführten Maßnahmen sind vorteilhafte Weiterbildungen und Verbesserungen des im Hauptanspruch angegebenen Stators möglich.

Besonders vorteilhaft ist, wenn das Federelement laschenförmig ausgebildet ist, da mit einer Lasche auf einfache Art eine flache Feder erreichbar ist, die quer zur Längserstreckung des

Sensorträgers wenig Bauraum erfordert. Durch die flache Ausführung des Sensorträgers lässt sich dieser sehr leicht in den Spalt zwischen den Spulen einstecken.

Weiterhin vorteilhaft ist, wenn die Lasche des Federelementes zwei Auflageflächen für das Sensorelement aufweist, da das Sensorelement auf diese Weise hinsichtlich der Position definiert gegen eine der Spulen gedrückt wird.

Auch vorteilhaft ist, wenn der Sensorträger zumindest ein seitlich auskragendes Stützelement aufweist, da auf diese Weise eine vorbestimmte Position des Sensorträgers im Spalt zwischen zwei Spulen eingestellt wird. Das am Sensorträger befestigte Sensorelement wird somit an eine vorbestimmte Position im Spalt zwischen den Spulen gebracht und dadurch an vorbestimmter Stelle an eine der Spulen kontaktiert. Das zumindest eine Stützelement stützt den Sensorträger federnd an der dem Sensorelement abgewandten Spule ab und wirkt dem Federelement entgegen.

Desweiteren vorteilhaft ist, wenn das zumindest eine Stützelement laschenförmig ausgebildet ist, da mit einer Lasche auf einfache Art eine flache Feder erreichbar ist, die quer zur Längserstreckung des Sensorträgers wenig Bauraum erfordert. Außerdem lässt sich das Stützelement auf diese Weise sehr einfach herstellen.

Gemäß dem Ausführungsbeispiel ist das Sensorelement des Temperatursensors ein Heißleiter- bzw. NTC-Sensorelement. Alternativ kann auch ein PTC-Sensorelement vorgesehen sein.

Vorteilhaft ist, wenn der Sensorträger Befestigungsmittel zum Befestigen zumindest eines vom Sensorelement aus verlaufenden Sensorkabels aufweist, da das Sensorkabel auf diese Weise beim Einstecken des Sensorträgers in den Spalt zwischen den Spulen vor Beschädigungen geschützt wird. Außerdem bilden die Befestigungsmittel eine Zugentlastung für die dünnen Drahtabgänge des Sensorelementes, falls von außen eine Zugkraft auf die Sensorkabel ausgeübt werden sollte.

Außerdem vorteilhaft ist, wenn der Sensorträger streifenförmig ausgeführt ist, da sich dieser auf diese Weise sehr einfach in den Spalt zwischen den Spulen einstecken oder einschieben lässt und wenig Bauraum benötigt. Dadurch wird die Montage und Demontage des Temperatursensors deutlich vereinfacht.

Weiter vorteilhaft ist, wenn der Sensorträger aus Kunststoff, Isolierpapier, Isolierfolie oder Verbundspan hergestellt ist. Bei der Ausführung mit Kunststoff können die Federelemente, die Stützelemente und die Befestigungselemente einstückig am Sensorträger mittels Spritzguss ausgeführt werden. Bei der Ausführung mit Papier kann der Sensorträger sehr einfach ausgestanzt und mit den Federelementen und Stützelementen vorgeformt werden. Hierzu kann ein sogenanntes Heißprägen oder Heißformen zur Anwendung kommen.

### Zeichnung

Ein Ausführungsbeispiel der Erfindung ist in der Zeichnung vereinfacht dargestellt und in der nachfolgenden Beschreibung näher erläutert.
- Fig.1: zeigt im Schnitt eine Teilansicht eines Stators einer elektrischen Maschine mit einem erfindungsgemäßen Sensorträger,
- Fig.2: einen erfindungsgemäßen Sensorträger nach Fig.1,
- Fig.3: eine erste Teilansicht des erfindungsgemäßen Sensorträgers nach Fig.1 und Fig.2,
- Fig.4: eine zweite Teilansicht des erfindungsgemäßen Sensorträgers nach Fig.1 bis Fig.3.

### Beschreibung des Ausführungsbeispiels

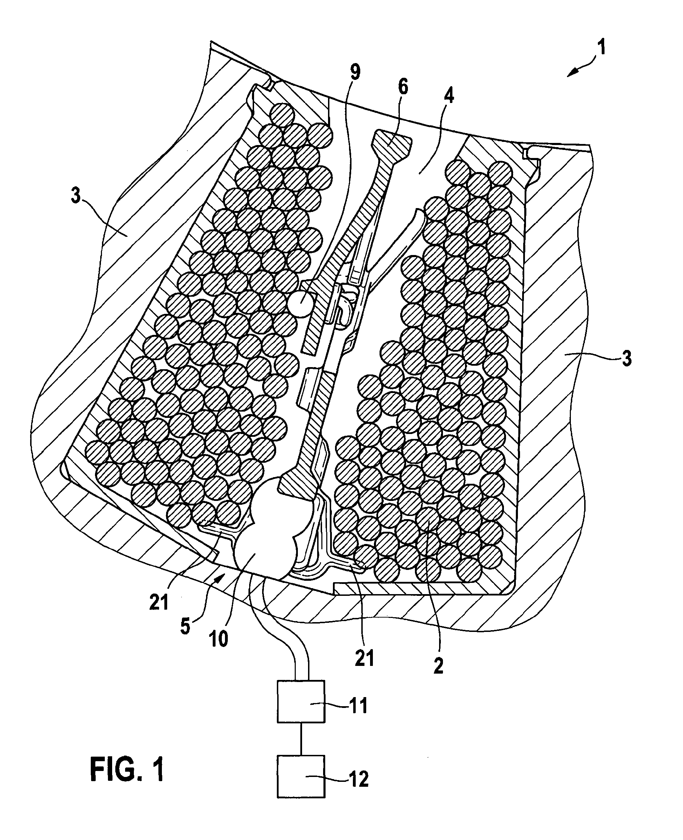

Fig.1 zeigt im Schnitt eine Teilansicht eines Stators einer elektrischen Maschine mit einem erfindungsgemäßen Sensorträger.

Der Stator 1 ist Teil einer elektrischen Maschine und weist elektrische Spulen 2 auf, um ein Magnetfeld zu erzeugen. Der Stator 1 besteht aus einem Blechpaket und hat einen Kranz von Zähnen 3, zwischen denen Zwischenräume bzw. Nuten 4 ausgebildet sind. Die elektrischen Spulen 2 umgeben die Zähne 3 mit ihren Wicklungen und füllen die Nuten 4 zumindest teilweise aus. Die elektrischen Spulen 2 sind stromdurchflossen und aufgrund von Verlusten in ihren Wicklungen stellt sich in den Nuten 4 und damit auch im Stator 1 eine erhöhte Temperatur ein. Die im Stator 1 anfallende Verlustwärme wird daher mit bekannten Kühlverfahren abgeführt. Die Temperatur des Stators wird mittels eines Temperatursensors 5 überwacht, um eine drohende Überhitzung der elektrischen Maschine rechtzeitig zu erkennen. Der Temperatursensor 5 ist im Bereich zwischen den elektrischen Spulen 2, also in den Nuten 4 angebracht, da dort die höchsten Temperaturen auftreten. Der Temperatursensor 5 ist an einem Sensorträger 6 vorgesehen und wird nach der Montage der elektrischen Spulen 2 an dem Stator 1 mit dem Sensorträger 6 in die Nuten 4 eingesteckt bzw. eingeschoben. Anschließend wird der Stator 1 in einem Imprägnierharz eingetaucht. Nach der Imprägnierung des Stators 1 ist der Temperatursensor 5 durch den gesteckten Sensorträger 6 und die Verklebung mit Imprägnierharz rüttelfest verankert und fixiert.

Der Temperatursensor 5 umfasst ein Sensorelement 9. Gemäß dem Ausführungsbeispiel ist das Sensorelement 9 des Temperatursensors 5 ein sogenannter Heißleiter- bzw. ein sogenanntes NTC-Sensorelement, von dem zwei Sensorkabel 8 zu einem Anschlussstecker 11 führen, der mit einem Steuergerät 12 verbunden ist. Das Sensorelement 9 ist beispielsweise perlenförmig ausgebildet, kann aber auch jede andere Form haben. Alternativ kann das Sensorelement 9 aber auch als PTC-Sensorelement ausgeführt sein. Die Sensorkabel 8 sind in einem dem Sensorelement 9 abgewandten Abschnitt von einem Schutzmantel 10 umgeben.

Das Sensorelement 9 gibt einen der Temperatur entsprechenden Wert, beispielsweise einen Widerstandswert, an das Steuergerät 12 weiter. Oberhalb einem vorgegebenen Schwellenwert beginnt das Steuergerät 12 die Ströme und damit die Leistung der elektrischen Maschine herunter zu regeln, um die Maschine vor Überhitzung zu schützen.

Erfindungsgemäß ist vorgesehen, dass der Sensorträger 6 ein Federelement 15 aufweist, das das Sensorelement 9 elastisch federnd unter leichtem Anpressdruck gegen eine der Spulen 2 drückt. Auf diese Weise ist sichergestellt, dass die tatsächliche Temperatur der elektrischen Spule 2 und nicht ein niedrigerer Wert gemessen wird. Der Sensorträger 6 ist so ausgelegt, dass das Sensorelement 9 möglichst nahe an dem heißesten Punkt der elektrischen Spule 2 kontaktiert wird.

Das Federelement 15 ist laschenförmig ausgebildet. Der Sensorträger 6 weist eine Aussparung 16 auf, an deren einen Seite die Lasche des Federelementes 15 vorgesehen ist. Im unbelasteten Zustand ragt die Lasche aus der Ebene des Sensorträgers 6 heraus. Beispielsweise hat die Lasche des Federelementes 16 eine Aufnahme 17 für das Sensorelement 9, in die das Sensorelement 9 lose eingelegt ist. Die Aufnahme 17 weist beispielsweise zwei ebene Auflageflächen auf, die das Sensorelement 9 in zwei unterschiedliche Richtungen abstützen. Alternativ kann die Aufnahme 17 auch als beispielsweise kalottenförmige Vertiefung ausgeführt sein, die das Sensorelement 9 teilweise aufnimmt und positioniert.

Der Sensorträger 6 hat außerdem zumindest ein seitlich auskragendes Stützelement 20, das sich an der dem Sensorelement 9 abgewandten Spule 2 federnd abstützt und dadurch eine vorbestimmte Position des Sensorträgers 6 in der Nut 4 zwischen zwei Spulen 2 in Umfangsrichtung des Stators 1 einstellt. Die Stützelemente 20 sind beispielsweise laschenförmig ausgebildet. Das zumindest eine Stützelement 20 kragt auf der dem Federelement 15 abgewandten Seite aus, wobei beide Elemente 15,20 in entgegen gesetzte Richtung federnd wirken.

In radialer Richtung bezüglich der Drehachse der elektrischen Maschine wird die Position des Sensorträgers 6 durch am Sensorträger ausgebildete Positionierelemente 21 vorbestimmt, die rechtwinklig zur Sensorträgerebene angeordnet und laschenförmig ausgebildet sind.

Außerdem kann ein Anschlag 19 vorgesehen sein, der die Position in axialer Richtung bezüglich der Drehachse der elektrischen Maschine in der Nut 4 zwischen den zwei Spulen 2 bestimmt. Dadurch wird sichergestellt, dass das Sensorelement 9 in axialer Richtung gesehen im heißesten Bereich zum Anliegen kommt. Beispielsweise hat der Anschlag 19 eine Laschen- oder Hakenform.

Außerdem sind am Sensorträger 6 beispielsweise Befestigungsmittel 22 zum Befestigen oder Fixieren der Sensorkabel 8 vorgesehen. Die Sensorkabel 8 sind beispielsweise zwischen den Befestigungsmitteln 22 beispielsweise eingelegt, eingesteckt, eingeclipst oder eingeklemmt. Der Sensorträger 6 ist beispielsweise streifenförmig ausgeführt, wobei das zumindest eine Sensorkabel 10 in Richtung der Längserstreckung und in der Ebene des Sensorträgers 6 geführt wird. Die Sensorkabel 8 verlaufen beispielsweise vom Stecker 11 kommend am Rand der einen Langseite 23 des Sensorträgers 6 entlang. Vom Rand des Sensorträgers 6 werden die Sensorkabel 8 nach innen über einen bogenförmigen Kabelkanal 24 zur Aussparung 16 mit dem Federelement 15 geführt. Der Kabelkanal 24 ist als Aussparung in dem Sensorträger 6 ausgeführt, so dass die Sensorkabel 8 weiterhin in der Ebene des Sensorträger 6 verlaufen und dort vor Beschädigungen und Druckbelastung geschützt sind. Auch in dem Kabelkanal 24 sind Befestigungsmittel 22 vorgesehen, die die Sensorkabel 8 in dem Kabelkanal 24 fixieren oder zumindest führen. Beispielsweise sind die Sensorkabel 8 im Kabelkanal 24 eingeclipst oder eingeklemmt. Die im Kabelkanal 24 vorgesehenen Befestigungsmittel 22 für die Sensorkabel 8 können aber auch Klebestreifen, Klebstoff, o.ä. sein.

Der Sensorträger 6 ist beispielsweise aus Kunststoff hergestellt. Alternativ sind auch andere elektrisch isolierende Materialien möglich, die eine integrierte Federfunktion für das Federelement 15 und die Stützelemente 20 ermöglichen, beispielsweise ein starres sogenanntes Phasenisolationspapier oder eine starre Isolierfolie bestehend aus einem Verbund von Papier und Folie, der auch als Verbundspan bezeichnet wird.

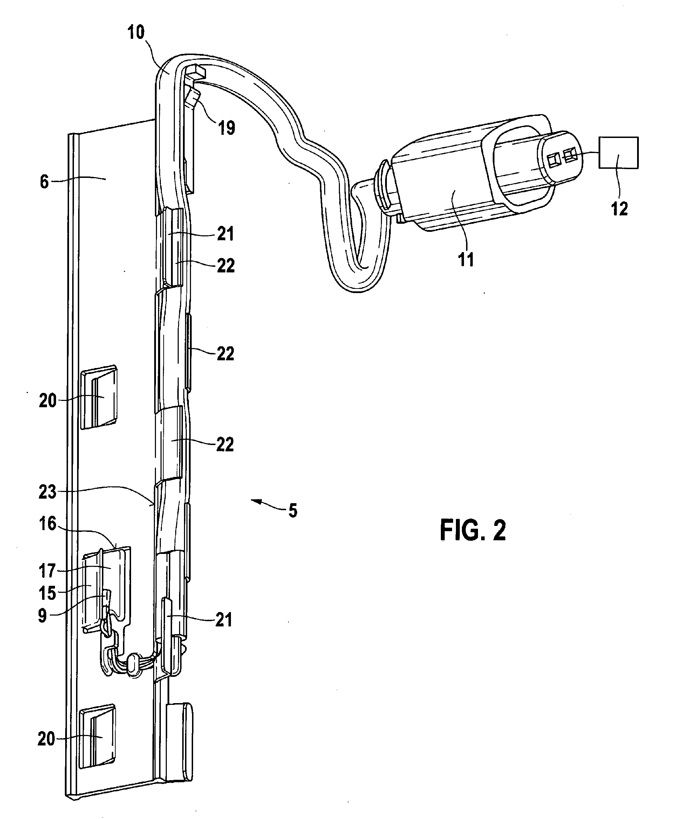

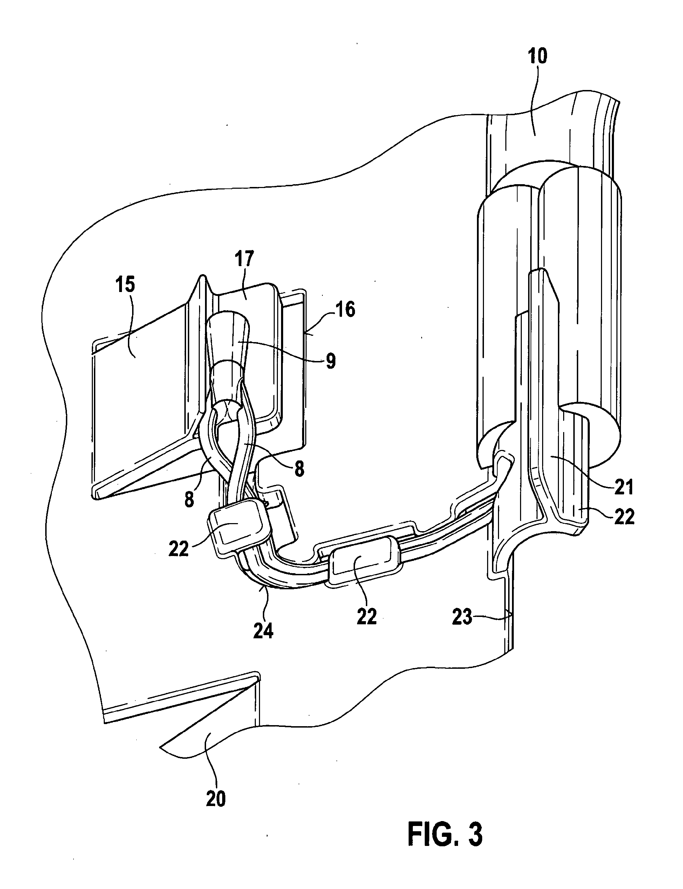

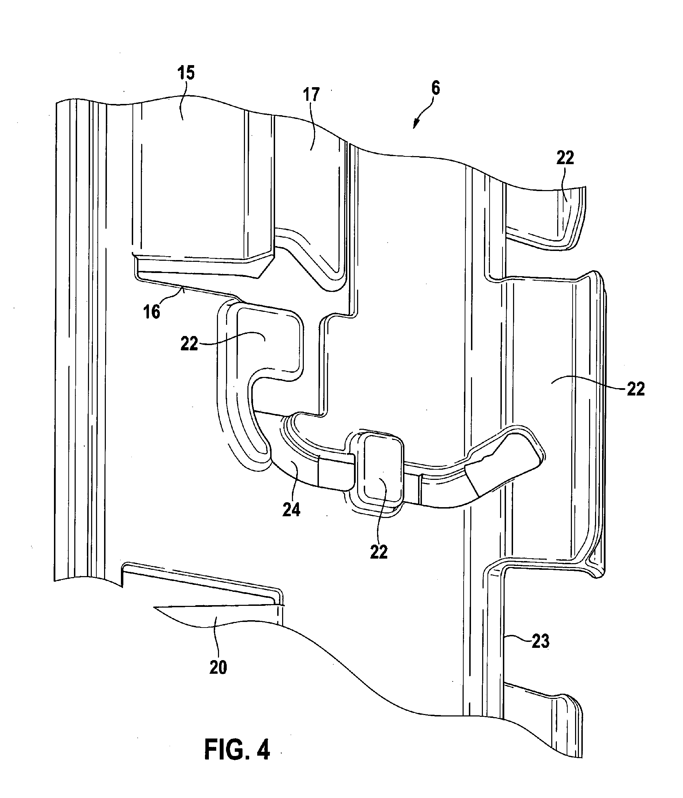

Bei dem Sensorträger nach Fig.2 bis Fig.4 sind die gegenüber der Ansicht nach Fig.1 gleichbleibenden oder gleichwirkenden Teile durch die gleichen Bezugszeichen gekennzeichnet.

## Patentansprüche

1. Stator einer elektrischen Maschine mit elektrischen Spulen (2) und mit einem Temperatursensor (5) zur Erfassung der Temperatur an einer der elektrischen Spulen (2), wobei der Temperatursensor (5) im Bereich zwischen den Spulen (2) an einem Sensorträger (6) vorgesehen ist und ein Sensorelement (9) aufweist, wobei der Sensorträger (6) ein Federelement (15) aufweist, das das Sensorelement (9) gegen eine der Spulen (2) drückt, **dadurch gekennzeichnet, dass** der Sensorträger (6) streifenförmig ausgeführt ist und zumindest ein seitlich auskragendes Stützelement (20) aufweist, wobei das Federelement (15) und das Stützelement (20) in entgegen gesetzte Richtung federnd wirken.

2. Stator nach Anspruch 1, **dadurch gekennzeichnet, dass** das Federelement (15) laschenförmig ausgebildet ist.

3. Stator nach Anspruch 1, **dadurch gekennzeichnet, dass** die Lasche des Federelementes (15) zwei Auflageflächen (17) oder eine Vertiefung für das Sensorelement (9) aufweist.

4. Stator nach Anspruch 1, **dadurch gekennzeichnet, dass** das Stützelement (20) laschenförmig ausgebildet ist.

5. Stator nach Anspruch 1, **dadurch gekennzeichnet, dass** das Sensorelement (9) des Temperatursensors (5) ein Heißleiter- bzw. NTC-Sensorelement oder ein Kaltleiter- bzw. PTC-Sensorelement ist.

6. Stator nach Anspruch 1, **dadurch gekennzeichnet, dass** der Sensorträger (6) Befestigungsmittel (22) zum Befestigen zumindest eines vom Sensorelement (9) aus verlaufenden Sensorkabels (10) aufweist.

7. Stator nach Anspruch 1, **dadurch gekennzeichnet, dass** der Sensorträger (6) aus Kunststoff, Isolierpapier, Isolierfolie oder Verbundspan hergestellt ist.

## Claims

1. Stator of an electrical machine, having electrical coils (2) and having a temperature sensor (5) for detecting the temperature at one of the electrical coils (2), wherein the temperature sensor (5) is provided on a sensor mount (6) in the region between the coils (2) and has a sensor element (9), wherein the sensor mount (6) has a spring element (15) which presses the sensor element (9) against one of the coils (2), **characterized in that** the sensor mount (6) is designed in the form of a strip and has at least one laterally projecting supporting element (20), wherein the spring element (15) and the supporting element (20) have a spring action in opposite directions.

2. Stator according to Claim 1, **characterized in that** the spring element (15) is in the form of a lug.

3. Stator according to Claim 1, **characterized in that** the lug of the spring element (15) has two bearing surfaces (17) or a recess for the sensor element (9).

4. Stator according to Claim 1, **characterized in that** the supporting element (20) is in the form of a lug.

5. Stator according to Claim 1, **characterized in that** the sensor element (9) of the temperature sensor (5) is a negative temperature coefficient, or NTC, sensor element, or a positive temperature coefficient, or PTC, sensor element.

6. Stator according to Claim 1, **characterized in that** the sensor mount (6) has fastening means (22) for fastening at least one sensor cable (10) which runs out from the sensor element (9).

7. Stator according to Claim 1, **characterized in that** the sensor mount (6) is produced from plastic, insulating paper, insulating film or composite press board.

## Revendications

1. Stator d'une machine électrique comprenant des bobines électriques (2) et un capteur de température (5) pour détecter la température au niveau de l'une des bobines électriques (2), le capteur de température (5) étant prévu dans la région entre les bobines (2) au niveau d'un support de capteur (6) et présentant un élément de capteur (9), le support de capteur (6) présentant un élément de ressort (15) qui presse l'élément de capteur (9) contre l'une des bobines (2), **caractérisé en ce que** le support de capteur (6) est réalisé en forme de bande et présente au moins un élément de support faisant saillie latéralement (20), l'élément de ressort (15) et l'élément de support (20) agissant de manière élastique dans des directions opposées.

2. Stator selon la revendication 1, **caractérisé en ce que** l'élément de ressort (15) est réalisé en forme de patte.

3. Stator selon la revendication 1, **caractérisé en ce que** la patte de l'élément de ressort (15) présente deux surfaces d'appui (17) ou un renfoncement pour l'élément de capteur (9).

4. Stator selon la revendication 1, **caractérisé en ce que** l'élément de support (20) est réalisé en forme de patte.

5. Stator selon la revendication 1, **caractérisé en ce que** l'élément de capteur (9) du capteur de température (5) est un élément de capteur à conducteur chauffant ou un élément de capteur NTC ou un élément de capteur à conducteur froid ou un élément de capteur PTC.

6. Stator selon la revendication 1, **caractérisé en ce que** le support de capteur (6) présente des moyens de fixation (22) pour la fixation d'au moins un câble de capteur (10) s'étendant depuis l'élément de capteur (9).

7. Stator selon la revendication 1, **caractérisé en ce que** le support de capteur (6) est fabriqué en plastique, en papier isolant, en film isolant ou en carton stratifié.
